# EUROPEAN PATENT APPLICATION

(11) **EP 2 434 813 A1**
(43) Date of publication of application: **28.03.2012**
(21) Application number: 10777764.1
(22) Date of filing: 18.05.2010
(51) Int. Cl.: H04W 52/58

(54) **RADIO BASE STATION AND MOBILE COMMUNICATION METHOD**

(30) Priority: 18.05.2009 JP 2009119912
(71) Applicant: NTT DOCOMO, INC., Chiyoda-ku Tokyo 100-6150 (JP)
(72) Inventor: KIYOSHIMA, Kohei, Tokyo 100-6150 (JP); ISHII, Hiroyuki, Tokyo 100-6150 (JP); OKUBO, Naoto, Tokyo 100-6150 (JP)
(74) Representative: HOFFMANN EITLE
(86) International application number: PCT/JP2010/058380
(87) International publication number: WO 2010/134531

(57) **Abstract**

A radio base station according to the present invention comprising : a radio base station configured to transmit a transmission power control command for a mobile station for controlling transmission power of an uplink data signal of the mobile station via a downlink control channel for a transmission power control command mapped to a specific subframe in a downlink channel, the radio base station including a resource assignment unit configured to decide the specific subframe and a transmission unit configured to transmit the transmission power control command for the mobile station via the downlink control channel for the transmission power control command mapped to the specific subframe decided by the resource assignment unit, in which the resource assignment unit is configured to decide the specific subframe according to a number of transmission power control commands transmitted in each subframe.

## Description

### TECHNICAL FIELD

The present invention relates to a radio base station configured to transmit a transmission power control command for a mobile station via a downlink control channel for a transmission power control command, which is mapped to a specific subframe in a downlink channel, in order to control transmission power of an uplink data signal of the mobile station, and a mobile communication method.

### BACKGROUND ART

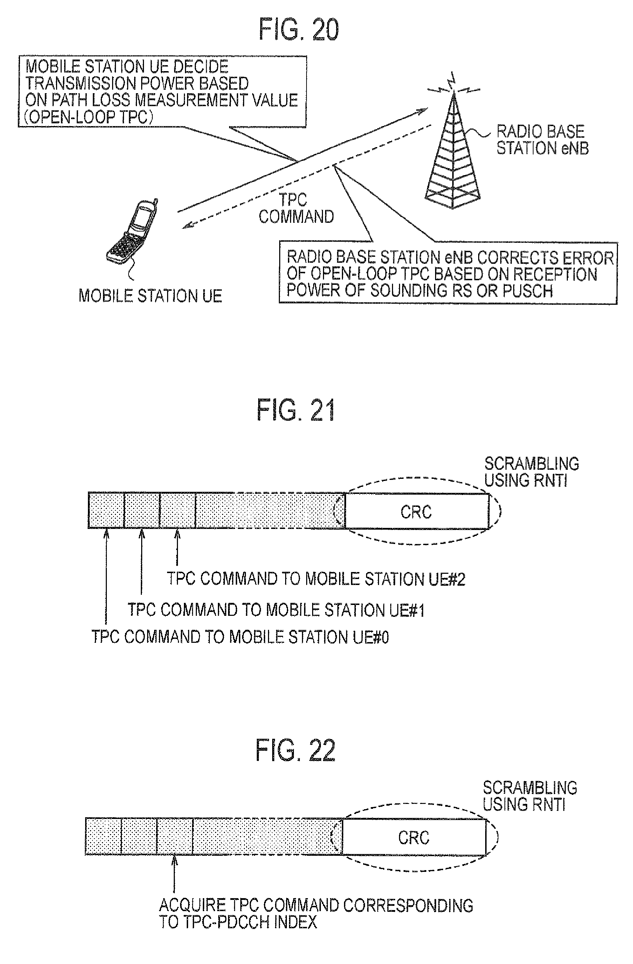

In an LTE (Long Term Evolution) mobile communication system defined in the 3GPP, as illustrated in Fig. 20, a mobile station UE is configured to perform transmission power control (Open-loop TPC) with respect to an uplink data signal, which is transmitted via PUSCH (Physical Uplink Shared Channel), and an uplink control signal, which is transmitted via PUCCH (Physical Uplink Control Channel), based on path loss and the like calculated using RS (Reference Signal).

Furthermore, in the mobile communication system, as illustrated in Fig. 20, a radio base station eNB is configured to perform transmission power control (Closed-loop TPC) based on the reception power of a Sounding RS, the uplink data signal and the like received from the mobile station UE, thereby correcting an error of the above-mentioned Open-loop TPC.

Among TPC (Transmission Power Control) commands used in the Closed-loop TPC, a TPC command for controlling the transmission power of the uplink data signal transmitted via the PUSCH is a TPC-PUSCH, and a TPC command for controlling the transmission power of the uplink control signal transmitted via the PUCCH is a TPC-PUCCH.

Here, the TPC-PUSCH is configured to be transmitted by a UL scheduling grant or TPC-PDCCH (TPC-Physical Downlink Control Channel, a downlink control channel for a transmission power control command), and to be transmitted by DL scheduling information or the TPC-PDCCH.

Fig. 21 illustrates an example of the configuration of the TPC-PDCCH. As illustrated in Fig. 21, a "DCI format 3" or a "DCI format 3A" defined in the 3GPP is applied to the TPC-PDCCH.

In detail, in the "DCI format 3", the number of available bits is the same as a "DCI format 0" applied to a UL scheduling grant, and the number of TPC commands which can be multiplexed is defined to be "the number of bits ÷ 2".

Furthermore, in the "DCI format 3A", the number of available bits is the same as a "DCI format 0" applied to the UL scheduling grant, and the number of TPC commands which can be multiplexed is defined to be "the number of bits".

As illustrated in Fig. 21, the radio base station eNB is configured to multiplex a plurality of TPC commands for a plurality of mobile stations on TPC-PDCCH.

Furthermore, as illustrated in Fig. 21, the radio base station eNB is configured to add a CRC (Cyclic Redundancy Code) calculated by performing a scheduling process with respect to one or a plurality of TPC commands by using a predetermined RNTI (Radio Network Temporary Identity).

Here, the radio base station eNB is configured to assign the above-mentioned RNTI and a TPC-PDCCH index to each mobile station UE in communication. In addition, the TPC-PDCCH index denotes information indicating a multiplexing position in TPC-PDCCH of TPC commands for each mobile station UE.

As illustrated in Fig. 22, each mobile station UE performs a CRC check process for TPC-PDCCH by using an assigned RNTI, in each subframe. When each mobile station UE succeeds in the CRC check process, each mobile station UE is configured to acquire a TPC command multiplexed at a position corresponding to an assigned TPC-PDCCH index from the TPC-PDCCH.

### SUMMARY OF THE INVENTION

### PROBLEMS TO BE SOLVED BY THE INVENTION

However, in the above-mentioned mobile communication system, since a transmission timing of the TPC-PDCCH and a method for assigning the TPC-PDCCH to a mobile station UE have not been defined, it is probable that it is not possible to efficiently perform the "Closed-loop TPC" using the TPC-PDCCH.

Therefore, the present invention is intended to overcome the above-described problem. An object of the present invention is to provide a radio base station and a mobile communication method, capable of efficiently transmitting a TPC command used in a "Closed-loop TPC" via TPC-PDCCH.

### MEANS FOR SOLVING THE PROBLEMS

A gist of a first characteristic of the present invention is a radio base station configured to transmit a transmission power control command for a mobile station for controlling transmission power of an uplink data signal of the mobile station via a downlink control channel for a transmission power control command mapped to a specific subframe in a downlink channel, the radio base station including a resource assignment unit configured to decide the specific subframe and a transmission unit configured to transmit the transmission power control command for the mobile station via the downlink control channel for the transmission power control command mapped to the specific subframe decided by the resource assignment unit, in which the resource assignment unit is configured to decide the specific subframe according to a number of transmission power control commands transmitted in each subframe.

A gist of a second characteristic of the present invention is a mobile communication method, by which a radio base station transmits a transmission power control command for a mobile station for controlling transmission power of an uplink data signal of the mobile station via a downlink control channel for a transmission power control command mapped to a specific subframe in a downlink channel, the mobile communication method including a step A of deciding the specific subframe, a step B of transmitting the transmission power control command for the mobile station via the downlink control channel for the transmission power control command mapped to the specific subframe decided in step A and a step C in which the mobile station acquires the transmission power control command for the mobile station via the downlink control channel for the transmission power control command, and controls the transmission power of the uplink data signal based on the transmission power control command for the mobile station, in which in the step A, the specific subframe is configured to be decided according to a number of transmission power control commands transmitted in each subframe.

### EFFECT OF THE INVENTION

As described above, according to the present invention, it is possible to provide a radio base station and a mobile communication method, capable of efficiently transmitting a TPC command used in a "Clased-Ioop TPC" via TPC-PDCCH.

### BRIEF DESCRIPTION OF THE DRAWINGS

[Fig. 1] Fig. 1 is an entire configuration diagram of a mobile communication system according to a first embodiment of the present invention.
[Fig. 2] Fig. 2 is a functional block diagram of a radio base station according to the first embodiment of the present invention.
[Fig. 3] Fig. 3 is a diagram explaining a method by which a radio base station assigns a resource for TPC-PDCCH according to the first embodiment of the present invention.
[Fig. 4] Fig. 4 is a diagram explaining a method by which a radio base station assigns a resource for TPC-PDCCH according to the first embodiment of the present invention.
[Fig. 5] Fig. 5 is a diagram explaining a method by which a radio base station assigns a resource for TPC-PDCCH according to the first embodiment of the present invention.
[Fig. 6] Fig. 6 is a diagram explaining a method by which a radio base station assigns a resource for TPC-PDCCH according to the first embodiment of the present invention.
[Fig. 7] Fig. 7 is a diagram explaining a method by which a radio base station assigns a resource for TPC-PDCCH according to the first embodiment of the present invention.
[Fig. 8] Fig. 8 is a diagram explaining a method by which a radio base station assigns a resource for TPC-PDCCH according to the first embodiment of the present invention.
[Fig. 9] Fig. 9 is a diagram explaining a method by which a radio base station assigns a resource for TPC-PDCCH according to the first embodiment of the present invention.
[Fig. 10] Fig. 10 is a diagram explaining a method by which a radio base station assigns a resource for TPC-PDCCH according to the first embodiment of the present invention.
[Fig. 11] Fig. 12 is a diagram explaining a method by which a radio base station assigns a resource for TPC-PDCCH according to the first embodiment of the present invention.
[Fig. 12] Fig. 12 is a diagram explaining a method by which a radio base station assigns a resource for TPC-PDCCH according to the first embodiment of the present invention.
[Fig. 13] Fig. 13 is a flowchart illustrating the operation of a radio base station according to the first embodiment of the present invention.
[Fig. 14] Fig. 14 is a flowchart illustrating the operation of a radio base station according to the first embodiment of the present invention.
[Fig. 15] Fig. 15 is a flowchart illustrating the operation of a radio base station according to the first embodiment of the present invention.
[Fig. 16] Fig. 16 is a flowchart illustrating the operation of a radio base station according to the first embodiment of the present invention.
[Fig. 17] Fig. 17 is a flowchart illustrating the operation of a radio base station according to the first embodiment of the present invention.
[Fig. 18] Fig. 18 is a flowchart illustrating the operation of a radio base station according to the first embodiment of the present invention.
[Fig. 19] Fig. 19 is a flowchart illustrating the operation of a radio base station according to the first embodiment of the present invention.
[Fig. 20] Fig. 20 is a diagram explaining transmission power control in a conventional mobile communication system.
[Fig. 21] Fig. 21 is a diagram explaining transmission power control in a conventional mobile communication system.
[Fig. 22] Fig. 22 is a diagram explaining transmission power control in a conventional mobile communication system.

### BEST MODES FOR CARRYING OUT THE INVENTION

### (Configuration of mobile communication system according to first embodiment of present invention)

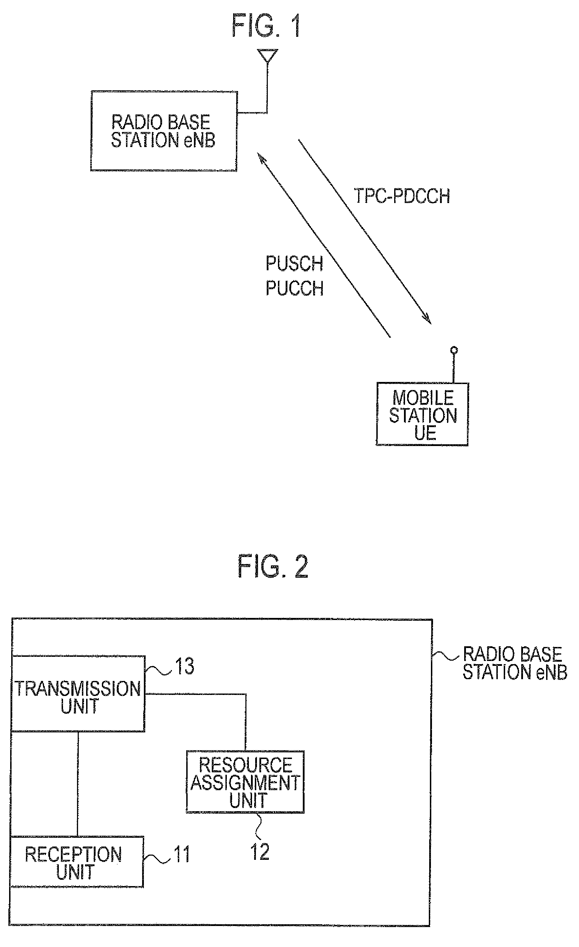

With reference to Fig. 1 through Fig. 12, the configuration of a mobile communication system according to a first embodiment of the present invention will be explained.

As illustrated in Fig. 1, the mobile communication system according to the present embodiment is an LTE mobile communication system. In the mobile communication system according to the present embodiment, a mobile station UE is configured to transmit an uplink data signal to a radio base station eNB via PUSCH and transmit an uplink control signal to the radio base station eNB via PUCCH.

Furthermore, in the mobile communication system according to the present embodiment, the radio base station eNB is configured to transmit a TPC command (TPC-PUSCH) for controlling the uplink data signal of the mobile station UE and a TPC command (TPC-PUCCH) for controlling the transmission power of the uplink control signal via TPC-PDCCH.

Here, the radio base station eNB may be configured to periodically transmit the TPC commands via the TPC-PDCCH.

In addition, in the mobile communication system according to the present embodiment, unless specifically stated otherwise, it is assumed that SPS (Semi-Persistent Scheduling) is applied and the mobile station UE is in a DRX (Discontinuous Reception) state.

As illustrated in Fig. 2, the radio base station eNB includes a reception unit 11, a resource assignment unit 12, and a transmission unit 13.

The reception unit 11 is configured to receive the uplink data signal transmitted from the mobile station UE via the PUSCH, and the uplink control signal and a Sounding RS transmitted from the mobile station UE via the PUCCH.

The resource assignment unit 12 is configured to decide a subframe (hereinafter, referred to as a specific subframe) for mapping TPC-PDCCH on which TPC commands for the mobile station UE are multiplexed and transmitted.

Here, from the standpoint of saving of a PDCCH resource, it is preferable to reduce resources to be assigned as to TPC-PDCCH if possible, and thus it is preferable to increase the number of TPC commands multiplexed to one TPC-PDCCH if possible.

Furthermore, in order to avoid collision, transmission timings (subframes), which are resources to be assigned to TPC-PDCCH, are preferably distributed if possible.

In consideration of this, the resource assignment unit 12 is configured to decide the above-mentioned "specific subframe".

In detail, the resource assignment unit 12 is configured to assign RNTI (temporal identification information) corresponding to the TPC-PDCCH for transmitting the TPC commands for the mobile station UE, and a TPC-PDCCH index indicating the multiplexing positions of the TPC commands in the TPC-PDCCH to the mobile station UE.

Here, it is assumed that a transmission timing (a subframe) is set for each RNTI.

For example, the resource assignment unit 12 may also be configured to assign RNTI for the TPC-PUSCH to the mobile station UE separately from RNTI for the TPC-PUCCH.

Furthermore, the resource assignment unit 12 may also be configured to assign a TPC-PDCCH index for the TPC-PUSCH to the mobile station UE separately from a TPC-PDCCH index for the TPC-PUCCH.

That is, the resource assignment unit 12 may also be configured to assign TPC-PDCCH for transmitting the TPC-PUSCH to the mobile station UE separately from TPC-PDCCH for transmitting the TPC-PUCCH.

Furthermore, the resource assignment unit 12 may also be configured to assign the cycle of a subframe, to which TPC-PDCCH for the mobile station UE is mapped, to the mobile station UE.

Here, the resource assignment unit 12 may also be configured to assign the cycle of a subframe, to which the TPC-PDCCH for transmitting the TPC-PUSCH is mapped, to the mobile station UE separately from the cycle of a subframe to which the TPC-PDCCH for transmitting the TPC-PUCCH is mapped.

In addition, the cycle of the subframe, to which the TPC-PDCCH for the mobile station UE is mapped, may be a fixed cycle.

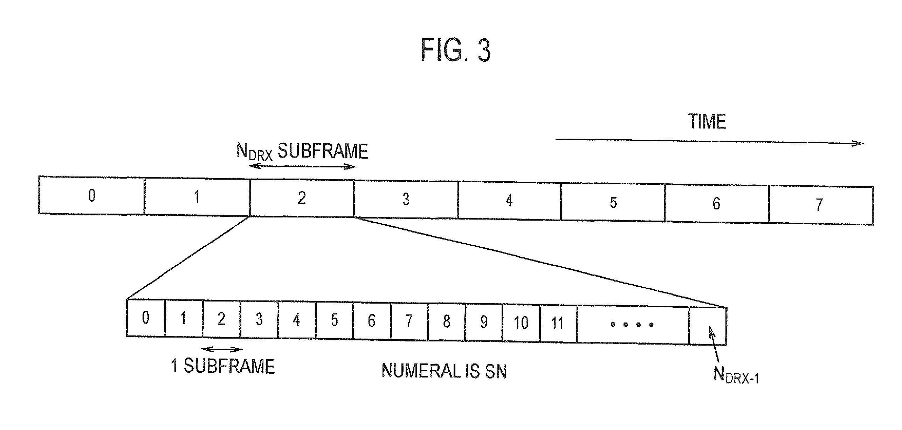

Furthermore, a subframe, to which TPC-PDCCH for transmitting a TPC command for the mobile station UE is mapped, is specified by a frame number (FN), which is a sequence number for identifying frames, and a subframe number (SN), which is a sequence number for identifying subframes in each frame, as illustrated in Fig. 3.

Hereinafter, a subframe specified by an "FN#x" and an "SN#y" will be referred to as a "subframe (#x,#y)".

For example, as illustrated in Fig. 3, each frame includes an NDRX number of subframes. Here, it is assumed that a DRX cycle when an SPS is applied to the mobile station UE is a time corresponding to one frame.

Furthermore, it is assumed that values from #0 to #{NP/NDRX)-1 are repeatedly used for the FN, and values from #0 to #NDRX-1 are repeatedly used for the SN. Here, the NP denotes a cycle of a subframe (a specific subframe) to which the TPC-PDCCH for transmitting the TPC command for the mobile station UE is mapped.

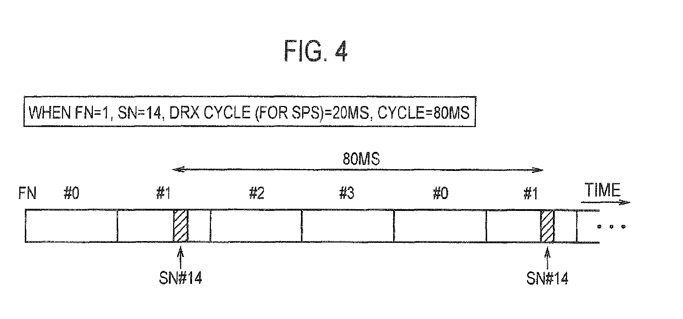

Fig. 4 illustrates an example when the DRX cycle is "20 ms", a cycle of the subframe, to which the TPC-PDCCH for transmitting the TPC command for the mobile station UE is mapped, is "80 ms", and the TPC-PDCCH for transmitting the TPC command for the mobile station UE is mapped to a subframe specified by an "FN#1" and an "SN#14", that is, a subframe (#1, #14).

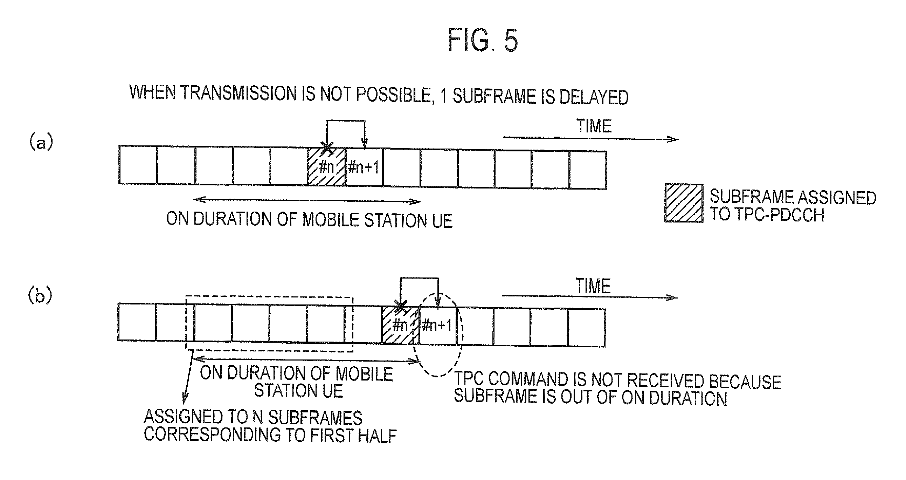

Furthermore, as illustrated in Fig. 5(a), in the mobile communication system according to the present embodiment, when the radio base station eNB fails to transmit a TPC command via TPC-PDCCH mapped to a subframe SN#n, the TPC command is configured to be retransmitted via TPC-PDCCH mapped to a subframe SN#n+1.

Therefore, when the mobile station UE is in a DRX state, if the subframe #n+1 is not in the "On Duration (reception interval)" of the mobile station UE as illustrated in Fig. 5(b), it is not possible for the mobile station UE to receive the TPC command transmitted by the radio base station eNB.

In this regard, when the mobile station UE is in the DRX state, the resource assignment unit 12 may be configured to decide any one of a predetermined number of (e.g., N) subframes corresponding to the first half of the On Duration of the mobile station UE as the subframe (the specific subframe) for transmitting the TPC command for the mobile station UE.

Furthermore, the resource assignment unit 12 is configured to decide the subframe (the specific subframe) for transmitting the TPC command for the mobile station UE according to the number of TPC commands multiplexed to each TPC-PDCCH.

In other words, the resource assignment unit 12 is configured to decide RNTI and a TPC-PDCCH index to be assigned to the mobile station UE according to the number of mobile stations UE including each RNTI, assigned thereto, that is, the number of TPC-PDCCH indexes at RNTI, assigned to the mobile stations UE.

In detail, the resource assignment unit 12 is configured to assign the RNTI and the TPC-PDCCH index to each mobile station UE as follows.

Firstly, the resource assignment unit 12 searches for RNTI, which are to be assigned to a mobile station UE (hereinafter, referred to as a new mobile station UE) newly starting a communication, from RNTI having been already assigned to other mobile stations UE.

For example, the resource assignment unit 12 may also be configured to search for RNTI, which have been assigned to the largest number of mobile stations UE, from the RNTI having been already assigned to other mobile stations UE and RNTI assignable to the new mobile station UE to which a subframe with SN satisfying "(Tp^{OD}×FN+SN) mod N=0" has been set, and may use the RNTI as RNTI to be assigned to the new mobile station UE.

Here, when the new mobile station UE is in the DRX state, it is assumed that the resource assignment unit 12 searches for RNTI to be assigned to the new mobile station UE from RNTI to which N subframes corresponding to the first half of an On Duration of the new mobile station UE have been set.

Among the RNTI to which the subframe with the SN satisfying "(Tₚ^{OD}×FN+SN) mod N=0" has been set, when there exist no RNTI assignable to the new mobile station UE, the resource assignment unit 12 searches for the RNTI, which have been assigned to the largest number of mobile stations UE, from the RNTI assignable to the new mobile station UE, to which other subframes has been set.

For example, in the case of "N=4", when there exist no RNTI assignable to the new mobile station UE among RNTI to which a subframe with SN satisfying "(Tₚ^{OD}×FN+SN) mod 4=0" has been set, the resource assignment unit 12 may also search for the RNTI assignable to the new mobile station UE in the sequence of RNTI to which a subframe with SN satisfying "(Tₚ^{OD}×FN+SN) mod 4=2" has been set, RNTI, to which a subframe with SN satisfying "(Tₚ^{OD}×FN+SN) mod 4=1" has been set, and RNTI to which a subframe with SN satisfying "(Tₚ^{OD}×FN+SN) mod 4=3" has been set.

Also, in the case of "N=5", when there exist no RNTI assignable to the new mobile station UE among RNTI to which a subframe with SN satisfying "(Tₚ^{OD}×FN+SN) mod 5=0" has been set, the resource assignment unit 12 may also search for the RNTI assignable to the new mobile station UE in the sequence of RNTI to which a subframe with SN satisfying "(Tₚ^{OD}×FN+SN) mod 5=2" has been set, RNTI to which a subframe with SN satisfying "(Tₚ^{OD}×FN+SN) mod 5=4" has been set, RNTI to which a subframe with SN satisfying "(Tₚ^{OD}×FN+SN) mod 5=1" has been set, and RNTI to which a subframe with SN satisfying "(Tₚ^{OD}×FN+SN) mod 5=3" has been set.

Furthermore, in the case of "N=6", when there exist no RNTI assignable to the new mobile station UE among RNTI to which a subframe satisfying "(Tₚ^{OD}×FN+SN) mod 6=0" has been set, the resource assignment unit 12 may also search for the RNTI assignable to the new mobile station UE in the sequence of RNTI to which a subframe satisfying "(Tₚ^{OD}×FN+SN) mod 6=2" has been set, RNTI to which a subframe satisfying "(Tₚ^{OD}×FN+SN) mod 6=4" has been set, RNTI to which a subframe satisfying "(Tₚ^{OD}×FN+SN) mod 6=1" has been set, RNTI to which a subframe satisfying "(Tₚ^{OD}×FN+SN) mod 6=3" has been set, and RNTI to which a subframe satisfying "(Tₚ^{OD}×FN+SN) mod 6=5" has been set.

Also, in the case of "N=7", when there exist no RNTI assignable to the new mobile station UE among RNTI to which a subframe satisfying "(Tₚ^{OD}×FN+SN) mod 7=0" has been set, the resource assignment unit 12 may also search for the RNTI assignable to the new mobile station UE in the sequence of RNTI to which a subframe satisfying "(Tₚ^{OD}×FN+SN) mod 7=2" has been set, RNTI to which a subframe satisfying "(Tₚ^{OD}D×FN+SN) mod 7=4" has been set, RNTI to which a subframe satisfying "(Tₚ^{OD}×FN+SN) mod 7=6" has been set, RNTI to which a subframe satisfying "(Tₚ^{OD}×FN+SN) mod 7=1" has been set, RNTI to which a subframe satisfying "(Tₚ^{OD}×FN+SN) mod 7=3" has been set, and RNTI to which a subframe satisfying "(Tₚ^{OD}×FN+SN) mod 7=5" has been set.

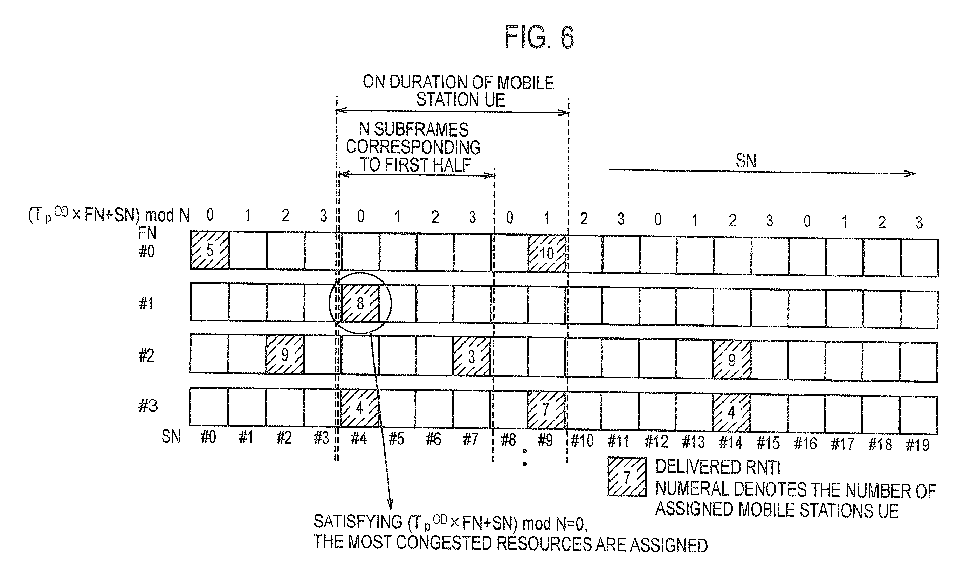

In the example of Fig. 6, among RNTI to which 4 (N) subframes corresponding to the first half of the On Duration of the new mobile station UE have been set, RNTI having been already assigned to other mobile stations UE, and RNTI assignable to the new mobile station UE, to which a subframe with SN#4 satisfying "(Tₚ^{OD}×FN+SN) mod N=0" has been set, the resource assignment unit 12 decides RNTI (to which a subframe (#1,#4) has been set), which have been assigned to the largest number of mobile stations UE, as RNTI to be assigned to the new mobile station UE.

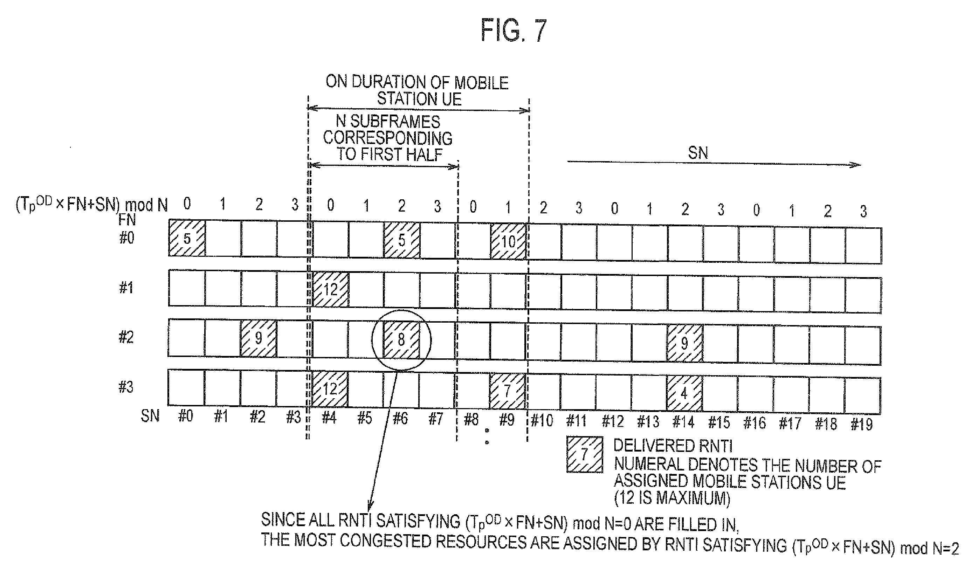

Furthermore, in the example of Fig. 7, among the RNTI to which the N (4) subframes corresponding to the first half of the On Duration of the new mobile station UE have been set and the RNTI having been already assigned to other mobile stations UE, there exist no RNTI assignable to the new mobile station UE, to which the subframe with the SN#4 satisfying "(Tₚ^{OD}×FN+SN) mod N=0" has been set. Here, the resource assignment unit 12 decides assumes that each RNTI is assignable to 12 mobile stations UE at maximum.

Thus, among the RNTI to which the 4 (N) subframes corresponding to the first half of the On Duration of the new mobile station UE have been set, the RNTI having been already assigned to other mobile stations UE, and RNTI assignable to the new mobile station UE, to which a subframe with SN#6 satisfying "(Tₚ^{OD}×FN+SN) mod N=2" has been set, the resource assignment unit 12 decides RNTI, to which RNTI (to which a subframe (#2,#6) has been set) assigned to the largest number of mobile stations UE, as the RNTI to be assigned to the new mobile station UE.

That is, the resource assignment unit 12 may also be configured to decide a subframe, which transmits the largest number of TPC commands among subframes capable of transmitting TPC commands, as the subframe (the specific subframe) for transmitting the TPC command for the mobile station UE.

Secondly, when there exist no RNTI assignable to the new mobile station UE among the RNTI having been already assigned to other mobile stations UE, the resource assignment unit 12 searches for the RNTI to be assigned to the new mobile station UE from RNTI (hereinafter, referred to as non-assigned RNTI) having not been assigned to other mobile stations UE, and decides a subframe set to the RNTI, as the subframe (the specific subframe) for transmitting the TPC command for the mobile station UE.

For example, in the case of "N=4", the resource assignment unit 12 may also search for the RNTI, assignable to the new mobile station UE in the sequence of RNTI to which a subframe with SN satisfying "(Tₚ^{OD}×FN+SN) mod 4=0" has been set, RNTI to which a subframe with SN satisfying "(Tₚ^{OD}×FN+SN) mod 4=2" has been set, RNTI to which a subframe with SN satisfying "SN mod 4=1" has been set, and RNTI to which a subframe with SN satisfying "(Tₚ^{OD}×FN+SN) mod 4=3" has been set.

Furthermore, in the case of "N=5", the resource assignment unit 12 may also search for the RNTI, assignable to the new mobile station UE in the sequence of RNTI to which a subframe with SN satisfying "(Tₚ^{OD}×FN+SN) mod 5=0" has been set, RNTI to which a subframe with SN satisfying "(Tₚ^{OD}×FN+SN) mod 5=2" has been set, RNTI to which a subframe with SN satisfying "(Tₚ^{OD}×FN+SN) mod 5=4" has been set, RNTI to which a subframe with SN satisfying "(Tₚ^{OD}×FN+SN) mod 5=1" has been set, and RNTI to which a subframe with SN satisfying "(Tₚ^{OD}×FN+SN) mod 5=3" has been set.

Moreover, in the case of "N=6", the resource assignment unit 12 may also search for the RNTI assignable to the new mobile station UE in the sequence of RNTI to which a subframe with SN satisfying "(Tₚ^{OD}×FN+SN) mod 6=0" has been set, RNTI to which a subframe with SN satisfying "(Tₚ^{OD}×FN+SN) mod 6=2" has been set, RNTI to which a subframe with SN satisfying "(Tₚ^{OD}×FN+SN) mod 6=4" has been set, RNTI to which a subframe with SN satisfying "(Tₚ^{OD}×FN+SN) mod 6=1" has been set, RNTI to which a subframe with SN satisfying "(Tₚ^{OD}×FN+SN) mod 6=3" has been set, and RNTI to which a subframe with SN satisfying "(Tₚ^{OD}×FN+SN) mod 6=5" has been set.

Moreover, in the case of "N=7", the resource assignment unit 12 may also search for the RNTI assignable to the new mobile station UE in the sequence of RNTI, to which a subframe with SN satisfying "(Tₚ^{OD}×FN+SN) mod 7=0" has been set, RNTI to which a subframe with SN satisfying "(Tₚ^{OD}×FN+SN) mod 7=2" has been set, RNTI to which a subframe with SN satisfying "(Tₚ^{OD}×FN+SN) mod 7=4" has been set, RNTI to which a subframe with SN satisfying "(Tₚ^{OD}×FN+SN) mod 7=6" has been set, RNTI to which a subframe with SN satisfying "(Tp^{OD}×FN+SN) mod 7=1" has been set, RNTI, to which a subframe with SN satisfying "(Tₚ^{OD}×FN+SN) mod 7=3" has been set, and RNTI to which a subframe with SN satisfying "(Tₚ^{OD}×FN+SN) mod 7=5" has been set.

Furthermore, the resource assignment unit 12 may also be configured to decide a frame including a transmission timing (a subframe), which has been set to RNTI, to be assigned to the new mobile station UE, based on FN for specifying a transmission timing (a subframe) set to RNTI finally assigned to the new mobile station UE.

For example, if FN for specifying a transmission timing (a subframe) set to a non-assigned RNTI finally assigned to the new mobile station UE is set as "Fpre" and FN of a frame including a transmission timing (a subframe) set to a RNTI to be assigned to the new mobile station UE is set as "Fnew", the resource assignment unit 12 is configured to decide the "Fnew" using "Fnew=Fpre+1".

Here, among frames specified by the "Fnew", when there exists no transmission timing (subframe) set to RNTI assignable to the new mobile station UE, the resource assignment unit 12 is configured to increment the value of the "Fnew" until the transmission timing (subframe) set to the RNTI assignable to the new mobile station UE is found.

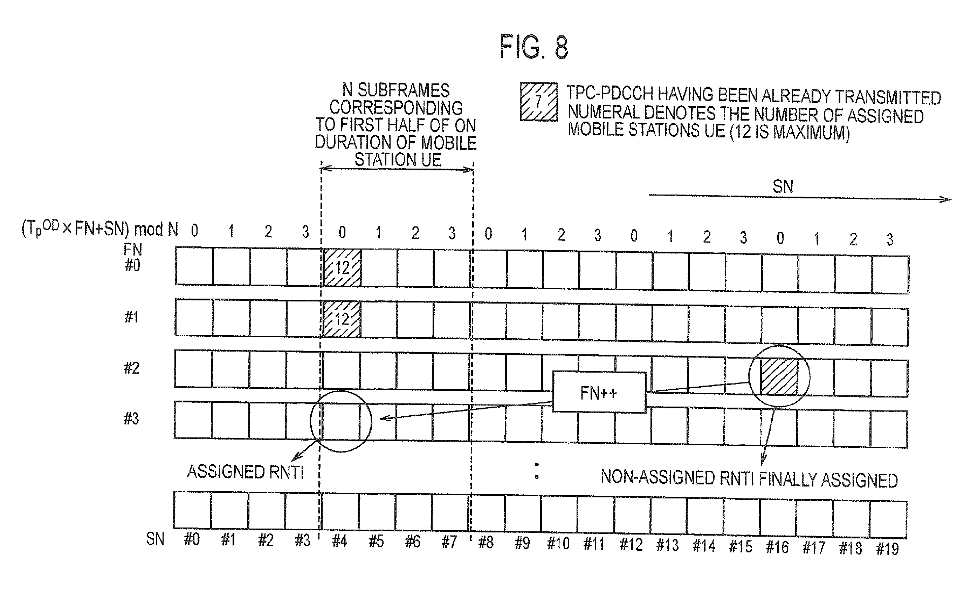

In the example of Fig. 8, among RNTI (to which subframes (#0,#4) and (#1,#4) have been set) having been already assigned to other mobile stations UE, since there is no RNTI assignable to the new mobile station UE, the resource assignment unit 12 searches for the RNTI assignable to the new mobile station UE from the non-assigned RNTI.

Here, since the "Fpre" for specifying the transmission timing (the subframe) set to the non-assigned RNTI finally assigned to the new mobile station UE is "FN#2" for specifying a subframe (#2,#16), the resource assignment unit 12 decides the "Fnew" for specifying the transmission timing (the subframe) set to the RNTI to be assigned to the new mobile station UE as "FN#3".

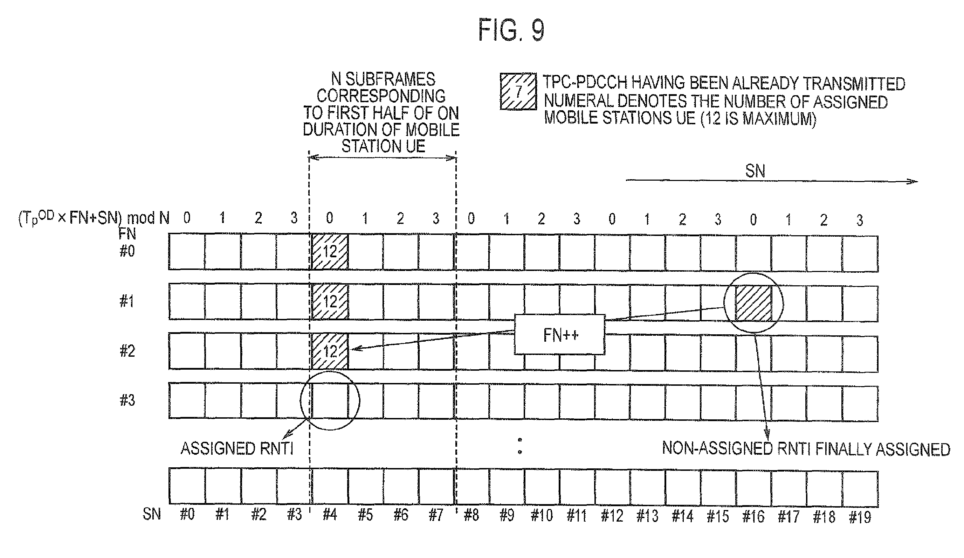

In addition, as illustrated in Fig. 9, when the "Fnew" for specifying the subframe set to the RNTI to be assigned to the new mobile station UE is decided as the "FN#2" and it is not possible to assign RNTI, to which a subframe (#2,#4) in a frame with the "FN#2" has been set, to the new mobile station UE, the resource assignment unit 12 may increment the value of the "Fnew" and decide the "Fnew" for specifying the subframe set to the RNTI to be assigned to the new mobile station UE as the "FN#3".

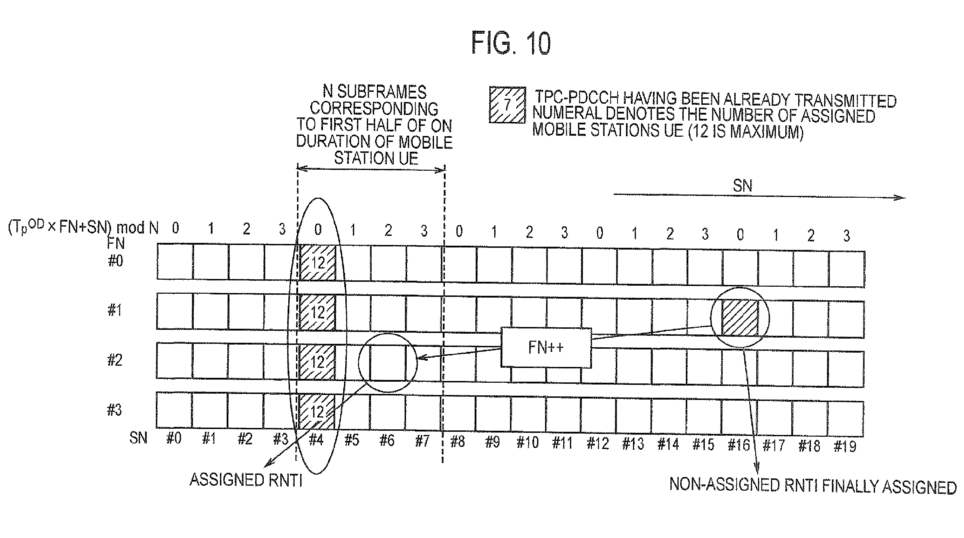

Furthermore, as illustrated in Fig. 10, when the "Fnew" for specifying the transmission timing (subframe) set to the RNTI to be assigned to the new mobile station UE is decided as the "FN#2", it is not possible to assign the RNTI, to which the subframe (#2,#4) in the frame with the "FN#2" has been set, to the new mobile station UE, and it is not possible to assign RNTI, to which a subframe (#3,#4) in a frame with the "FN#3" has been set, to the new mobile station UE, the resource assignment unit 12 may decide RNTI, to which a subframe (#2,#6) in the frame with the "FN#2" has been set, as the RNTI to be assigned to the new mobile station UE.

Moreover, among the RNTI to which the 4 (N) subframes corresponding to the first half of the On Duration of the new mobile station UE have been set, when there exist no RNTI assignable to the new mobile station UE, the resource assignment unit 12 may also decide RNTI, to which subframes with a low-numbered SN have been set, to be preferentially to be assigned the new mobile station UE among RNTI to which remaining subframes of the On Duration of the new mobile station UE have been set.

Moreover, among the RNTI to which the 4 (N) subframes corresponding to the first half of the On Duration of the new mobile station UE have been set, when there exist no RNTI assignable to the new mobile station UE, the resource assignment unit 12 may also decide RNTI, to which subframes with the lowest-numbered SN assignable to the new mobile station UE have been set, as the RNTI to be assigned to the new mobile station UE, among the RNTI to which the remaining subframes of the On Duration of the new mobile station UE have been set.

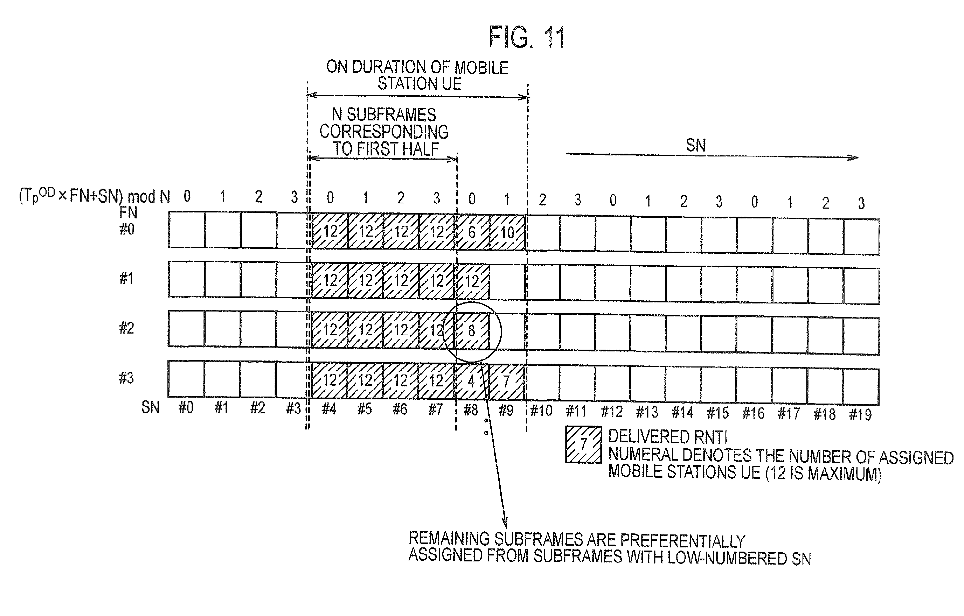

In the example of Fig. 11, among the RNTI to which the 4 subframes (SN#0 to #3) corresponding to the first half of the On Duration of the new mobile station UE have been set, when there exist no RNTI assignable to the new mobile station UE and it is not possible to assign the RNTI, to which the 4 subframes (SN#0 to #3) corresponding to the first half of the On Duration of the new mobile station UE have been set, to the new mobile station UE, the resource assignment unit 12 may also decide the RNTI, to which the subframes with the lowest-numbered SN assignable to the new mobile station UE has been set, and RNTI (to which a subframe (#2,#8) has been set), which has been assigned to the largest number of mobile stations UE, as the RNTI to be assigned to the new mobile station UE, among the RNTI to which the remaining subframes of the On Duration of the new mobile station UE have been set.

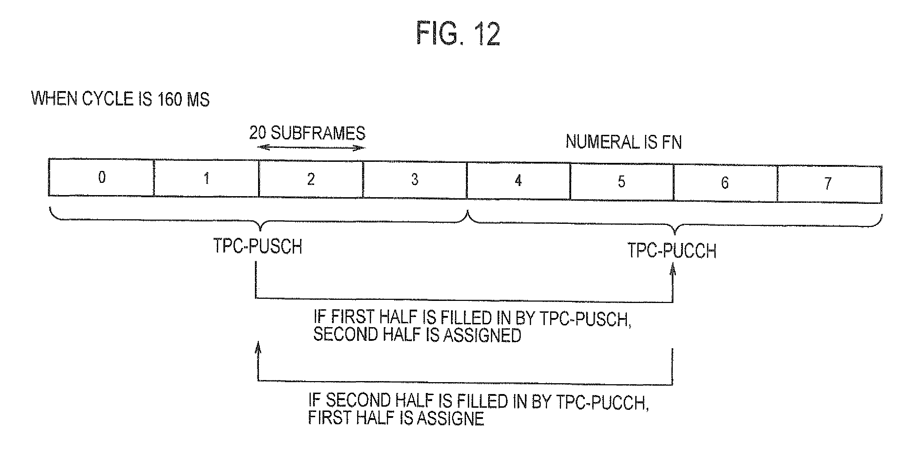

Furthermore, the resource assignment unit 12 may be configured to allow a subframe interval, in which the TPC-PDCCH for transmitting the TPC command (the TPC-PUSCH) for controlling the transmission power of the uplink data signal of each mobile station UE is mapped, to be different from a subframe interval in which the TPC-PDCCH for transmitting the TPC command (the TPC-PUCCH) for controlling the transmission power of the uplink control signal of each mobile station UE is mapped.
For example, as illustrated in Fig. 12, the resource assignment unit 12 may be configured to map the TPC-PDCCH for transmitting the TPC-PUSCH to subframes in a frame with FN#0 to #3, and map the TPC-PDCCH for transmitting the TPC-PUCCH to subframes in a frame with FN#4 to #7.

In addition, when all the subframes in the frame with FN#0 to #3 are filled in by the TPC-PDCCH for transmitting the TPC-PUSCH, the resource assignment unit 12 may also be configured to map the TPC-PDCCH for transmitting the TPC-PUSCH to the subframes in the frame with FN#4 to #7.

In the same manner, when all the subframes in the frame with FN#4 to #7 are filled in by the TPC-PDCCH for transmitting the TPC-PUCCH, the resource assignment unit 12 may also be configured to map the TPC-PDCCH for transmitting the TPC-PUCCH to the subframes in the frame with FN#0 to #3.

The transmission unit 13 is configured to multiplex a TPC command to the TPC-PDCCH for the mobile station UE decided by the resource assignment unit 12, and transmit the multiplexed TPC command.

Here, the transmission unit 13 is configured to generate a TPC command for the uplink data signal based on the reception power of the uplink data signal received in the reception unit 11, and generate a TPC command for the uplink control signal based on the reception power of the uplink control signal received in the reception unit 11.

Furthermore, in relation to the TPC-PDCCH for transmitting the TPC command for the mobile station UE which is mapped to a subframe, the transmission unit 13 may also be configured to multiplex the TPC command for the mobile station UE to a multiplexing position indicated by the TPC-PDCCH index assigned to the mobile station UE, and add CRC (an error detecting code) to the multiplexing position, for which a scrambling process has been performed using the RNTI assigned to the mobile station UE.

### (Operation of mobile communication system according to first embodiment of present invention)

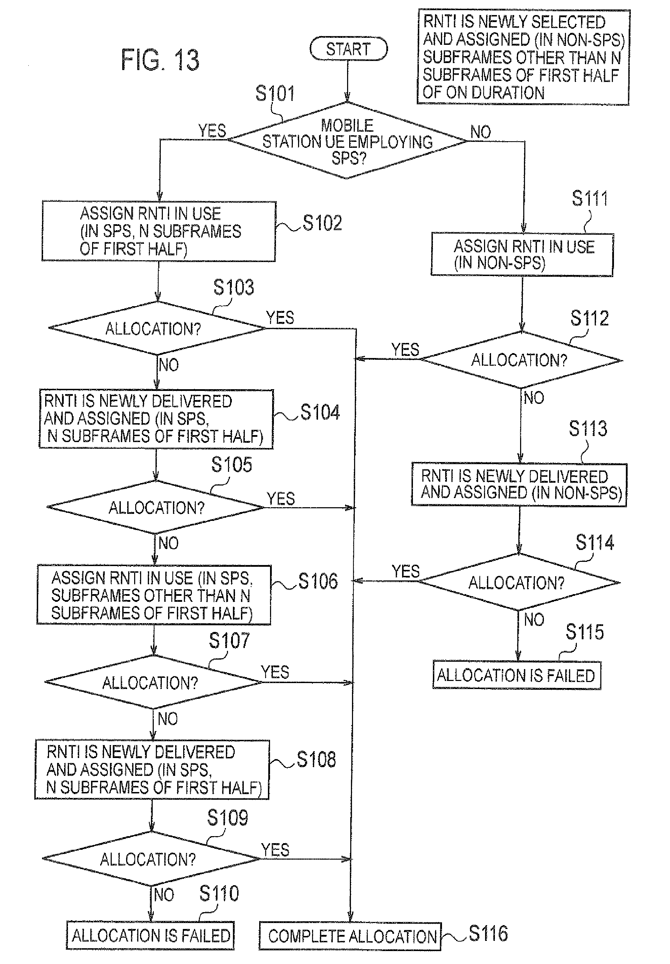

Hereinafter, with reference to Fig. 13 through Fig. 19, the operation of the mobile communication system according to the present embodiment, that is, the operation of the radio base station eNB according to the present embodiment will be explained.

Specifically, with reference to Fig. 13 through Fig. 19, an operation will be explained, in which the radio base station eNB according to the present embodiment assigns resources (RNTI and a TPC-PDCCH index) of TPC-PDCCH for transmitting a TPC command for a mobile station UE#1 to the mobile station UE#1.

As illustrated in Fig. 13, in step S101, the radio base station eNB determines whether the mobile station UE#1 is a mobile station UE to which an SPS is applied.

When it is determined that the mobile station UE#1 is the mobile station UE to which the SPS is applied, the present procedure proceeds to step S102. When it is determined that the mobile station UE#1 is not the mobile station UE to which the SPS is applied, the present procedure proceeds to step S111

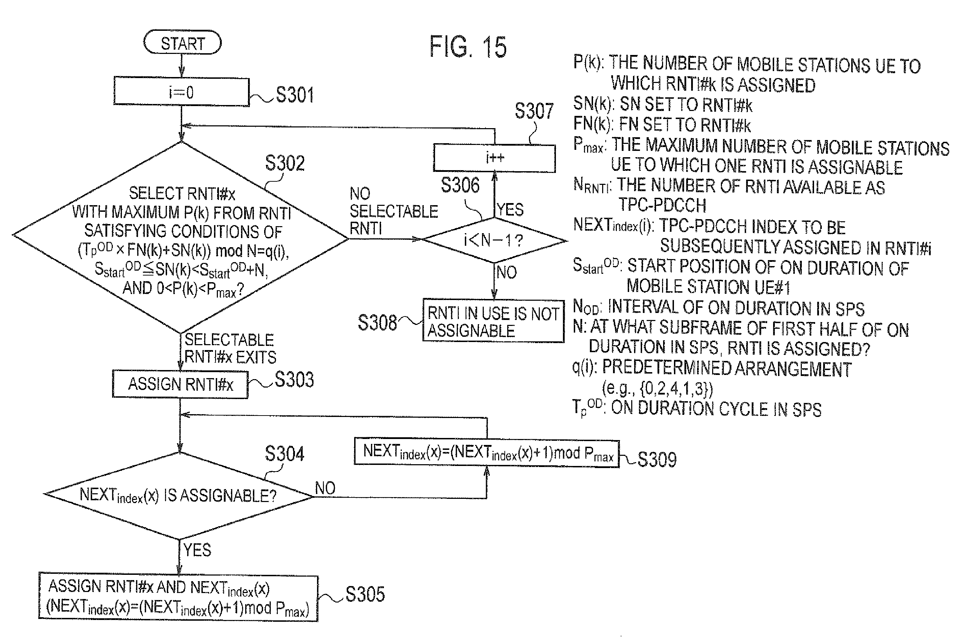

In step S102, the radio base station eNB attempts to assign RNTI, to which N subframes corresponding to the first half of the On Duration of the mobile station UE#1 have been set, and RNTI, which have been already assigned to other mobile stations UE, to the mobile station UE#1 according to the example of Fig 15.

Specifically, as illustrated in Fig. 15, the radio base station eNB sets "i=0" in step S301, and selects RNTI#x with the maximum P(k) from RNTI satisfying the conditions of "(Tₚ^{OD}×FN(k)+SN(k)) mod N=q(i))", "SₛₜₐᵣₜOD≤SN(k)<SₛₜₐᵣₜOD+N", and "0<P(k)<Pmax" in step S302. Here, the "Tₚ^{OD}" denotes an On duration cycle.

Here, the "FN(k)" denotes FN of a subframe set to the RNTI#k, the "SN(k)" denotes SN of the subframe set to the RNTI#k, the "q(i)" denotes a predetermined arrangement (e.g., {0,2,4,1,3}), the "SₛₜₐᵣₜOD" denotes a start position (SN) of the On duration of the mobile station UE#1, and the "Pₘₐₓ" denotes the maximum number of mobile stations UE to which one RNTI is assignable.

When a selectable RNTI#x exists, the present procedure proceeds to step S303. When the selectable RNTI#x does not exist, the present procedure proceeds to step S306.

In step S303, the radio base station eNB decides to assign the RNTI#x to the mobile station UE#1 as the resource of the TPC-PDCCH for transmitting the TPC command for the mobile station UE#1.

In step S304, the radio base station eNB determines whether it is possible to assign a "NEXT_{index}(X)" to the mobile station UE#1. Here, the "NEXT_{index}(i)" denotes a TPC-PDCCH index to be sequentially assigned in RNTI#i.

When it is determined that it is possible to assign the "NEXT_{index}(x)", the present procedure proceeds to step S305. When it is determined that it is not possible to assign the "NEXT_{index}(x)", the present procedure proceeds to step S309.

In step S305, the radio base station eNB assigns the RNTI#x and the "NEXT_{index}(x)" to the mobile station UE#1 as the resource of the TPC-PDCCH for transmitting the TPC command for the mobile station UE, and updates the "NEXT_{index}(x)" using a "NEXT_{index}(x)= (NEXT_{index},(x)+1) mod Pₘₐₓ".

In step S309, the radio base station eNB updates the "NEXT_{index}(x)" using the "NEXT_{index}(x)= (NEXT_{index}(x)+1) mod Pm=x". Then, the present procedure returns to step S304.

Meanwhile, in step S306, the radio base station eNB determines whether "i<N-1" is established.

When it is determined that the "i<N-1" is established, the radio base station eNB increments "i" by 1 in step S307. When it is determined that the "i<N-1" is not established, the radio base station eNB determines that it is not possible to assign the RNTI to which N subframes corresponding to the first half of the On Duration of the mobile station UE#1 have been set, and the RNTI having been already assigned to other mobile stations UE, in step S308.

Returning to Fig. 13, in step S103, when the radio base station eNB has succeeded in assigning the RNTI in step S102, the present procedure proceeds to step S116, thereby completing the operation for assigning the resource of the TPC-PDCCH for transmitting the TPC command for the mobile station UE#1.

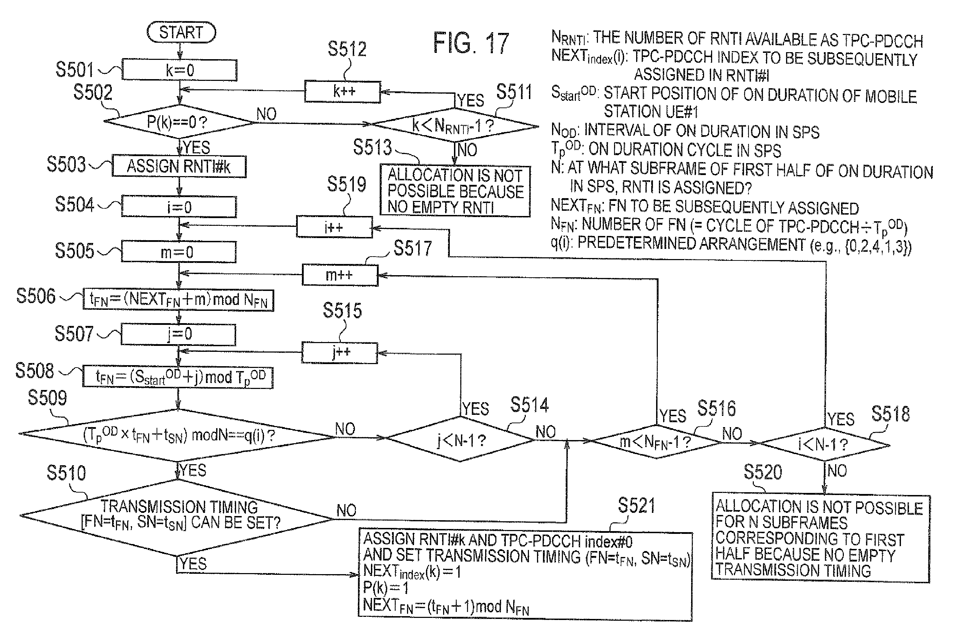

Meanwhile, in step S103, when the radio base station eNB has failed to assign the RNTI in step S102, the present procedure proceeds to step S104. That is, the radio base station eNB attempts to assign the RNTI, to which the N subframes corresponding to the first half of the On Duration of the mobile station UE#1 have been set, and RNTI, which are non-assigned RNTI, to the mobile station UE#1 according to the example of Fig. 17.

Specifically, as illustrated in Fig. 17, the radio base station eNB sets "k=0" in step S501, and determines whether "P(k)==0" is established in step S502. Here, the "P(k)" denotes the number of mobile stations UE to which the RNTI#k has been assigned.

When it is determined that the "P(k)==0" is established, the present procedure proceeds to step S503. When it is determined that the "P(k)==0" is not established, the present procedure proceeds to step S511.

In step S503, the radio base station eNB decides the RNTI#k as an RNTI allocation candidate which is the resource of the TPC-PUCCH for transmitting the TPC command for the mobile station UE#1.

The radio base station eNB sets "i=0" in step S504, sets "m=0" in step S505, sets "t_{FN}=(NEXT_{FN}+m) mod N_{FN}" in step S506, sets "j=0" in step S507, and sets "t_{SN}=(SₛₜₐᵣₜOD+j) mod TₚOD" in step S508.

Here, the "NEXT_{FN}" denotes FN of frames to be subsequently assigned and the "N_{FN}" denotes the number of FNs calculated by "the cycle of the TPC-PDCCH÷TₚOD".

In step S509, the radio base station eNB determines whether "(t_{FN}(TₚOD+t_{SN}) mod N == q(i)" is established. When it is determined that the "(t_{FN}(TₚOD+tSN) mod N == q(i)" is established, the present procedure proceeds to step S510. When it is determined that the "(t_{FN}(TₚOD+t_{SN}) mod N == q(i)" is not established, the present procedure proceeds to step S514.

In step S510, the radio base station eNB determines whether it is possible to set the subframe (t_{FN}(=FN),t_{SN}(=SN)) as the transmission timing with respect to the RNTI#k.

When "YES" is established in step S510, the present procedure proceeds to step S521. When "NO" is established in step S510, the present procedure proceeds to step S516.

In step S521, the radio base station eNB assigns resources of the TPC-PDCCH, which are the RNTI#k and the TPC-PDCCH index#0, to the mobile station Use#1. Here, the radio base station eNB sets the subframe (t_{FN}(=FN),t_{SN}(=SN)) as the transmission timing with respect to the RNTI#k.

Furthermore, the radio base station eNB sets "NEXT_{index}(k)=1", "P(k)=1, and "NEXT_{FN}=(t_{FN}+1) mode N_{FN}".

In step S511, the radio base station eNB determines whether "k<N_{RNTI}-1" is established. Here, the "N_{RNTI}" denotes the number of RNTI available for the TPC-PDCCH.

When it is determined that the "k<N_{RNTI}-1" is established, the radio base station eNB increments the "k" by 1 in step S512. When it is determined that the "k<N_{RNTI}-1" is not established, the radio base station eNB determines that it is not possible to assign a non-assigned RNTI, to the mobile station UE#1 in step S513.

In step S514, the radio base station eNB determines whether "j<N-1" is established.

When it is determined that the "j<N-1" is established, the radio base station eNB increments the "j" by 1 in step S515. Then, the present procedure proceeds to step S508.

Meanwhile, when it is determined that the "j<N-1" is not established, the radio base station eNB determines whether "m<N_{FN}-1" is established in step S516.

When it is determined that the "m<N_{FN}-1" is established, the radio base station eNB increments the "m" by 1 in step S517. Then, the present procedure proceeds to step S506.

Meanwhile, when it is determined that the "m<N_{FN}-1" is not established, the radio base station eNB determines whether "i<N-1" is established in step S518.

When it is determined that the "i<N-1" is established, the radio base station eNB increments the "i'' by 1 in step S519. Then, the present procedure proceeds to step S505.

Meanwhile, when it is determined that the "i<N-1" is not established, the radio base station eNB determines that it is not possible to assign the non-assigned RNTI to the mobile station UE#1 in step S520.

Returning to Fig. 13, in step S105, when the radio base station eNB has succeeded in assigning the RNTI in step S104, the present procedure returns to step S116, thereby completing the operation for assigning the resource of the TPC-P17CCH for transmitting the TPC command for the mobile station UE#1.

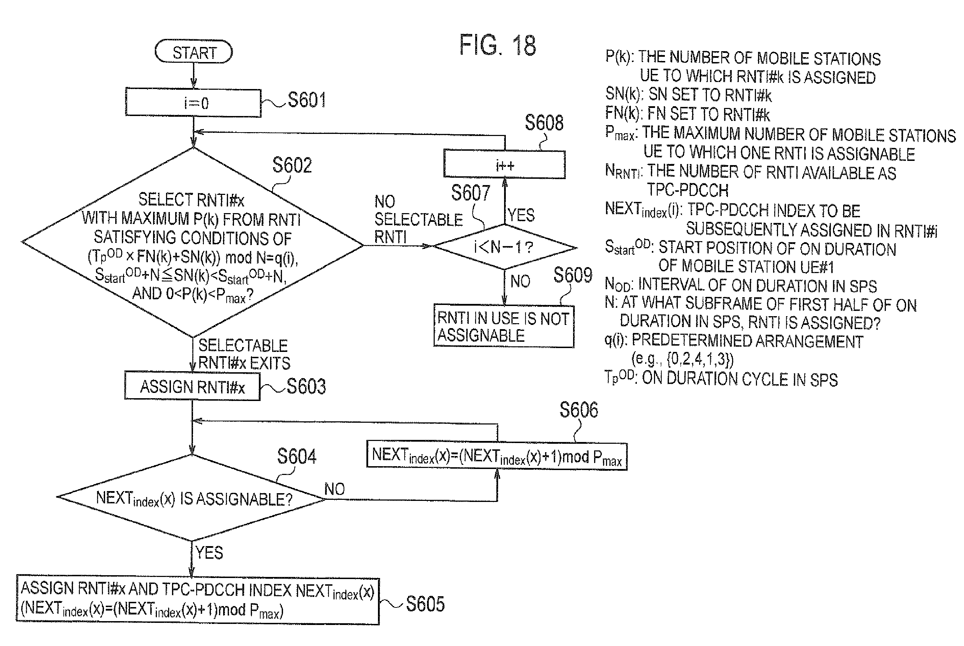

Meanwhile, in step S105, when the radio base station eNB has failed to assign the RNTI in step S104, the present procedure proceeds to step S106. That is, the radio base station eNB attempts to assign RNTI, to which subframes other than the N subframes corresponding to the first half of the On Duration of the mobile station UE#1 have been set, and RNTI,, which have been already assigned to other mobile stations UE, to the mobile station UE#1 according to the example of Fig. 18.

Specifically, as illustrated in Fig. 18, the radio base station eNB sets "i=0" in step S601, and selects RNTI#x with the maximum P(k) from RNTI satisfying the conditions of "(Tₚ^{OD}×FN(k)+SN(k)) mod N=q(i))", "SₛₜₐᵣₜOD+N≤SN(k)<SₛₜₐᵣₜOD+N_{OD}", and "0<P(k)<Pₘₐₓ" in step S602. Here, the "N_{OD}" denotes an interval of the On Duration of the mobile station UE#1.

When a selectable RNTI#K exists, the present procedure proceeds to step S603. When the selectable RNTI#K does not exist, the present procedure proceeds to step S607.

In step S603, the radio base station eNB decides to assign the RNTI#x to the mobile station UE#1 as the resource of the TPC-PUCCH for transmitting the TPC command for the mobile station UE#1.

In step S604, the radio base station eNB determines whether it is possible to assign the "NEXT_{index}(x)" to the mobile station UE#1 as the TPC-PDCCH index.

When it is determined that it is possible to assign the "NEXT_{index}(x)", the present procedure proceeds to step S605. When it is determined that it is not possible to assign the "NEXT_{index}(x)", the present procedure proceeds to step S606.

In step S605, the radio base station eNB assigns the RNTI#x and the "NEXT_{index}(x)" to the mobile station UE#1 as the resource of the TPC-PDCCH for the mobile station UE, and updates the "NEXT_{index}(x)" using the "NEXT_{index}(x)=(NEXT_{index}(x)+1 mod Pₘₐₓ".

In step S606, the radio base station eNB updates the "NEXT_{index}(x)" using the "NEXT_{index}(x)=(NEXT_{index}(x)+1 mod Pₘₐₓ". The present procedure returns to step S604.

Meanwhile, the radio base station eNB determines whether "i<N-1" is established in step S607.

When it is determined that the "i<N-1" is established, the radio base station eNB increments the "i" by 1 in step S608. When it is determined that the "i<N-1" is not established, the radio base station eNB determines that it is not possible to assign RNTI to which subframes other than the N subframes corresponding to the first half of the On Duration of the mobile station UE#l have been set, and the RNTI having been already assigned to other mobile stations UE, in step S609,

Returning to Fig. 13, in step So 0'7, when the radio base station eNB has succeeded in assigning the RNTI in step S106, the present procedure proceeds to step S116, thereby completing the operation for assigning the resource of the TPC-PDCCH for transmitting the TPC command for the mobile station UE#1.

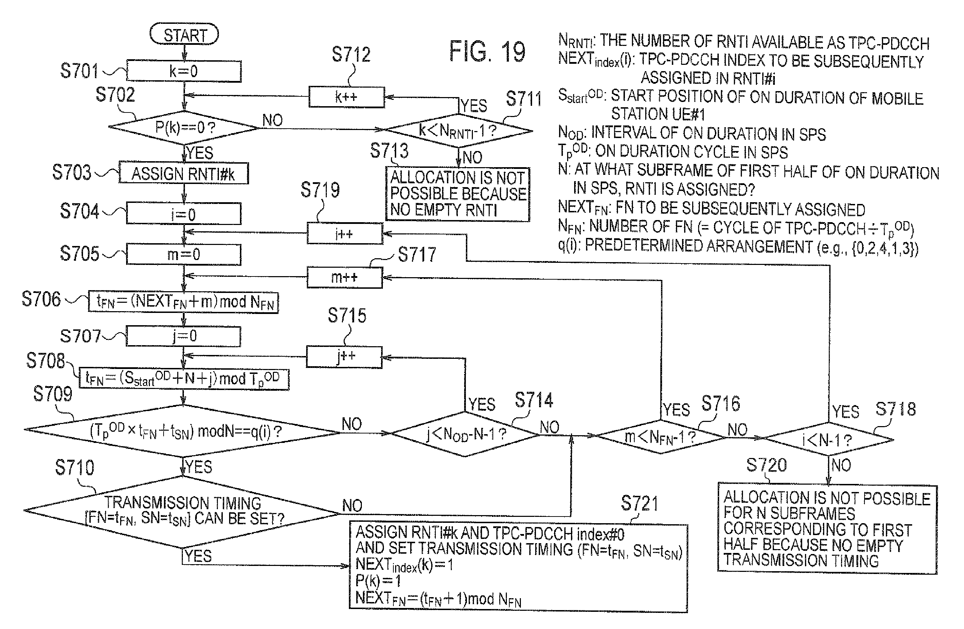

Meanwhile, in step S107, when the radio base station eNB has failed to assign the RNTI in step S106, the present procedure proceeds to step S108. That is, the radio base station eNB attempts to assign the RNTI, to which the subframes other than the N subframes corresponding to the first half of the On Duration of the mobile station UE#1 have been set, and the RNTI, which are non-assigned RNTI, to the mobile station UE#1 according to the example of Fig. 19.

Specifically, as illustrated in Fig 19, the radio base station eNB sets "k=0" in step S701, and determines whether "P(k)==0" is established in step S702,

When it is determined that the "P(k)==0" is established, the present procedure proceeds to step S703. When it is determined that the "P(k)==0" is not established, the present procedure proceeds to step S711.

In step S703, the radio base station eNB decides the RNTI#k as the RNTI allocation candidate which is the resource of the TPC-PDCCH for the mobile station UE#1.

The radio base station eNB sets "i=0" in step S704, sets "m=0" in step S705, sets "t_{FN}=(NEXT_{FN}+m) mod N_{FN}" in step S706, sets "j=0" in step S707, and sets "tSN=(SₛₜᵣₐₓOD+N+j) mod Tₚ^{OD}" in step S708.

In step S709, the radio base station eNB determines whether "(t_{FN}×Tₚ^{OD}+t_{SN}) mod N ==q(i)" is established. When it is determined that the "(t_{FN}×Tₚ^{OD}+tSN) mod N ==q(i)" is established, the present procedure proceeds to step S710. When it is determined that the "(t_{FN×}TₚOD+tSN) mod N ==q(i)" is not established, the present procedure proceeds to step S714.

In step S710, the radio base station eNB determines whether it is possible to set the subframe (t_{FN}(=FN),t_{SN}(=SN)) as the transmission timing with respect to the RNTI#K.

When "YES" is established in step S710, the present procedure proceeds to step S721. When "NO" is established in step S710, the present procedure proceeds to step S716.

In step S721, the radio base station eNB assigns resources of the TPC-PDCCH, which are the RNTI#k and the TPC-PDCCH index#0, to the mobile station UE#1. Here, the radio base station eNB sets the subframe (t_{FN}(=FN),t_{SN}(=SN)) as the transmission timing of the TPC-PDCCH with respect to the RNTI#K.

Furthermore, the radio base station eNB sets "NEXT_{index}(k)=1", "P(k)=1", and "NEXT_{FN}=(t_{FN}+1) mode N_{FN}".

In step S711, the radio base station eNB determines whether "k<NRNTI-1" is established.

When it is determined that the "k<NRNTI-1" is established, the radio base station eNB increments the "k" by 1 in step S712. When it is determined that the "k<NRNTI-1" is not established, the radio base station eNB determines that it is not possible to assign a non-assigned RNTI to the mobile station UE#1 in step S713.

In step S714, the radio base station eNB determines whether "j<N_{OD}-N-1" is established.

When it is determined that the "j<N_{OD}-N-1" is established, the radio base station eNB increments the "j" by 1 in step S715. Then, the present procedure proceeds to step S708.

Meanwhile, when it is determined that the "j<N_{OD}-N-1" is not established, the radio base station eNB determines whether "m<N_{FN}-1" is established in step S716.

When it is determined that the "m<N_{FN}-1" is established, the radio base station eNB increments the "m" by 1 in step S717. Then, the present procedure proceeds to step S706.

Meanwhile, when it is determined that the "m<N_{FN}-1" is not established, the radio base station eNB determines whether "i<N-1" is established in step S718.

When it is determined that the "i<N-1" is established, the radio base station eNB increments the "i" by 1 in step S519. Then, the present procedure proceeds to step S705.

Meanwhile, when it is determined that the "i<N-1" is not established, the radio base station eNB determines that it is not possible to assign the non-assigned RNTI to the mobile station UE#1 in step S720.

Returning to Fig. 13, in step S107, when the radio base station eNB has succeeded in assigning the RNTI in step S106, the present procedure proceeds to step S116, thereby completing the operation for assigning the resource of the TPC-PDCCH for transmitting the TPC command for the mobile station UE#1.

Meanwhile, in step S109, when the radio base station eNB has failed to assign the RNTI in step S108, the present procedure proceeds to step S110. That is, the radio base station eNB fails to assign the resources (the RNTI, and the TPC-PDCCH index) of the TPC-PDCCH for transmitting the TPC command for the mobile station UE#1.

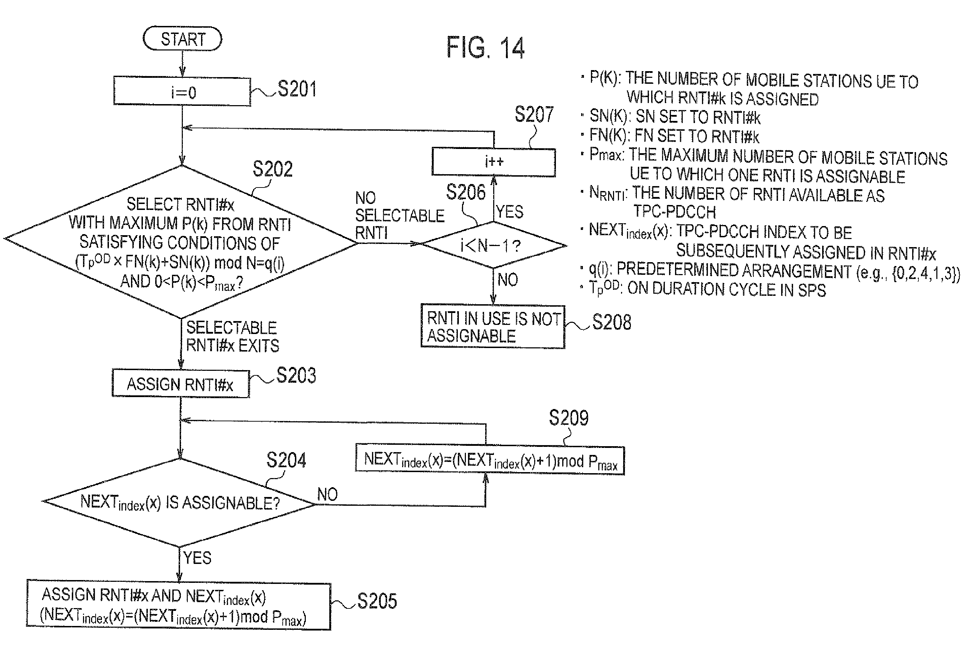

Meanwhile, in step S111, the radio base station eNB attempts to assign the RNTI, which have been already assigned to other mobile stations UE, to the mobile station UE#1 according to the example of Fig.14.

Specifically, as illustrated in Fig. 14, the radio base station eNB sets "1=0" in step S201, and selects the RNTI#x with the maximum P(k) from the RNTI satisfying the conditions of "(TₚOD×FN(k)+SN(k)) mod N=q(i))" and "0<P(k)<Pₘₐₓ" in step S202.

When a selectable RNTI#x exists, the present procedure proceeds to step S203. When the selectable RNTI#x does not exist, the present procedure proceeds to step S306.

In step S203, the radio base station eNB decides to assign the RNTI#x to the mobile station UE#1 as the resource of the TPC-PDCCH for transmitting the TPC command for the mobile station UE#1.

In step S204, the radio base station eNB determines whether it is possible to assign the "NEXT_{index}(x)" to the mobile station UE#1 as the TPC-PDCCH index.

When it is determined that it is possible to assign the "NEXT_{index}(x)", the present procedure proceeds to step S205. When it is determined that it is not possible to assign the "NEXT_{index}(x)", the present procedure proceeds to step S209.

In step S205, the radio base station eNB assigns the RNTI#x and the "NEXT_{index}(x)" to the mobile station UE#1 as the resource of the TPC-PDCCH for transmitting the TPC command for the mobile station UE, and updates the "NEXT_{index}(x)" using the "NEXT_{index}(x)=(NEXT_{index}(x)+1) mod Pmax".

In step S209, the radio base station eNB updates the "NEXT_{index}(x)" using the "NEXT_{index}(x)=(NEXT_{index}(x)+1) mod Pmax". Then, the present procedure returns to step S204.

Meanwhile, in step S206, the radio base station eNB determines whether "i<N-1" is established.

When it is determined that the "i<N-1" is established, the radio base station eNB increments "i" by 1 in step S207. When it is determined that the "i<N-1" is not established, the radio base station eNB determines that it is not possible to assign the RNTI having been already assigned to other mobile stations UE, in step S208.

Returning to Fig. 13, in step S112, when the radio base station eNB has succeeded in assigning the RNTI, in step S111, the present procedure proceeds to step S116, thereby completing the operation for assigning the resource of the TPC-PDCCH for transmitting the TPC command for the mobile station UE#1.

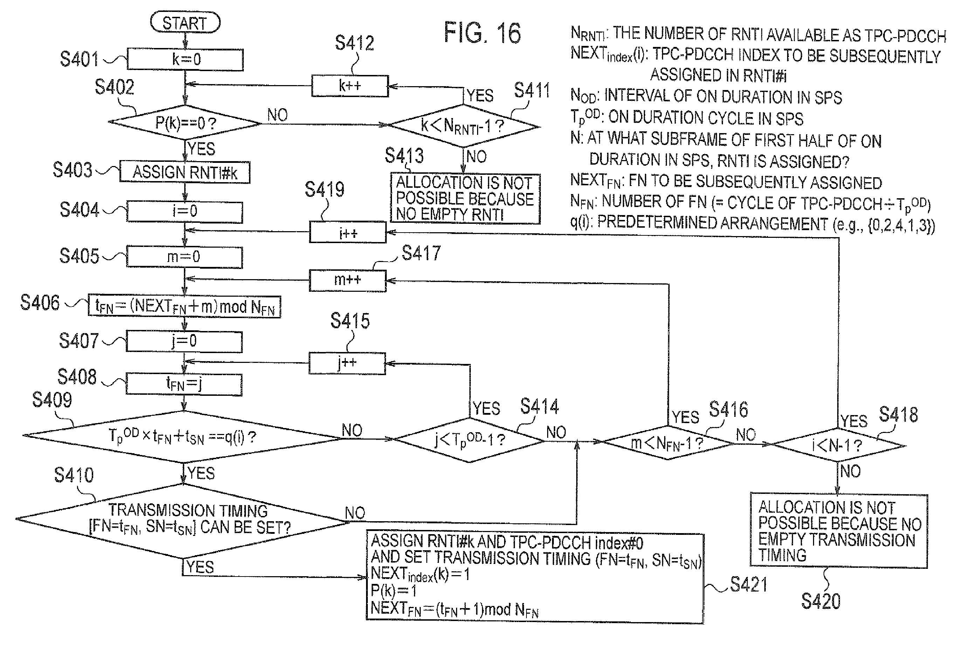

Meanwhile, in step S112, when the radio base station eNB has failed to assign the RNTI in step S111, the present procedure proceeds to step S113. That is, the radio base station eNB attempts to assign the RNTI, which are non-assigned RNTI, to the mobile station UE#1 according to the example of Fig. 16.

Specifically, as illustrated in Fig. 16, the radio base station eNB sets "k=0" in step S401, and determines whether "P(k)==0" is established in step S402.

When it is determined that the "P(k)==0" is established, the present procedure proceeds to step S403. When it is determined that the "P(k)==0" is not established, the present procedure proceeds to step S409.

In step S403, the radio base station eNB decides to assign the RNTT#k as the resource of the TPC-PDCCH for transmitting the TPC command for the mobile station UE#1.

The radio base station eNB sets "i=0" in step S404, sets "m=0" in step S405, sets "t_{FN}=(NEXT_{FN}+m) mod N_{FN}" in step S406, sets "j=0" in step S407, and sets "t_{SN}=j" in step S408.

In step S409, the radio base station eNB determines whether "(t_{FN}(TₚOD+tSN) mod N == q(i)" is established. When it is determined that the "(t_{FN}(TpOD+t_{SN}) mod N == q(i)" is established, the present procedure proceeds to step S410. When it is determined that the "(t_{FN}(TpOD+t_{SN}) mod N == q(i)" is not established, the present procedure proceeds to step S414.

In step S410, the radio base station eNB determines whether it is possible to set the subframe (t_{FN}(=FN),t_{SN}(=SN)) as the transmission timing with respect to the RNTI#k.

When "YES" is established in step S410, the present procedure proceeds to step S421. When "NO" is established in step S410, the present procedure proceeds to step S416.

In step S421, the radio base station eNB assigns resources of the TPC-PDCCH, which are the RNTI#K and the TPC-PDCCH index#0, to the mobile station UE#1. Here, the radio base station eNB sets the subframe (t_{FN}(=FN),t_{SN}(=SN) as the transmission timing with respect to the RNTI#K.

Furthermore, the radio base station eNB sets "NEXT_{index}(k)=₁", "P(k)=1", and "NEXT_{FN}=(t_{FN}+1) mode N_{FN}".

In step S411, the radio base station eNB determines whether "k<NRNTI-1" is established.

When it is determined that the "k<NRNTI-1" is established, the radio base station eNB increments the "k" by 1 in step S412. When it is determined that the "i<NRNTI-1" is not established, the radio base station eNB determines that it is not possible to assign a non-assigned RNTI to the mobile station LTE#1 in step S413.

In step S414, the radio base station eNB determines whether "j<TₚOD-1" is established.

When it is determined that the "j<TₚOD-1" is established, the radio base station eNB increments the "j" by 1 in step S415. Then, the present procedure proceeds to step S409.

Meanwhile, when it is determined that the "J<TₚOD-1" is not established, the radio base station eNB determines whether "m<N_{FN}-1" is established in step S416.

When it is determined that the "m<N_{FN}-1" is established, the radio base station eNB increments the "m" by 1 in step S417. Then, the present procedure proceeds to step S406.

Meanwhile, when it is determined that the "m<N_{FN}-1" is not established, the radio base station eNB determines whether "i<N-1" is established in step S418.

When it is determined that the "i<N-1" is established, the radio base station eNB increments the "i" by 1 in step S419. Then, the present procedure proceeds to step S405.

Meanwhile, when it is determined that the "i<N-1" is not established, the radio base station eNB determines that it is not possible to assign the non-assigned RNTI to the mobile station UE#1 in step S420.

Returning to Fig. 13, in step S114, when the radio base station eNB has succeeded in assigning the RNTI in step S113, the present procedure returns to step S116, thereby completing the operation for assigning the resource of the TPC-PDCCH for transmitting the TPC command for the mobile station UE#1.

Meanwhile, in step S114, when the radio base station eNB has failed to assign the RNTI in step S113, the present procedure proceeds to step S115. That is, the radio base station eNB fails to assign the resources (the RNTI and the TPC-PDCCH index) of the TPC-PUCCH for transmitting the TPC command for the mobile station UE#1.

### (Operation and Effect of mobile communication system according to first embodiment of present invention)

In accordance with the mobile communication system according to the first embodiment of the present invention, it is possible to increase the number of TPC commands multiplexed to one TPC-PDCCH if possible. As a consequence, it is possible to reduce the number of resources to be assigned to the TPC-PDCCH if possible, resulting in the saving of PDCCH resources.

Furthermore, in accordance with the mobile communication system according to the first embodiment of the present invention, it is possible to distribute resources (subframes) to be assigned to the TPC-PDCCH if possible, so that it is possible to avoid collision between assigned resources.

The characteristics of the present embodiment as described above may be expressed as follows:

A gist of a first characteristic of the present embodiment is a radio base station eNB configured to transmit a transmission power control command for a mobile station UE for controlling transmission power of an uplink data signal of the mobile station UE via TPC-PDCCH (a downlink control channel for a transmission power control command) mapped to a specific subframe in PDCCH (a downlink channel), a resource assignment unit 12 configured to decide the specific subframe (the subframe mapping TPC-PDCCH) and a transmission unit 13 configured to transmit the transmission power control command for the mobile station UE via TPC-PDCCH for the transmission power control command mapped to the specific subframe decided by the resource assignment unit 12, in which the resource assignment unit 12 is configured to decide the specific subframe according to a number of transmission power control commands transmitted in each subframe.

In the first characteristic of the present embodiment, the resource assignment unit 12 may be configured to decide a subframe, in which a largest number of transmission power control commands are transmitted among the subframes, as the specific subframe.

In the first characteristic of the present embodiment, the resource assignment unit 12 may be configured to assign temporal identification information and TPC-PDCCH index (the index) indicating a multiplexing position of the transmission power control command for the mobile station UE in the downlink control channel for the transmission power control command mapped to the specific subframe to the mobile station UE, and the transmission unit 13 may be configured to multiplex the transmission power control command for the mobile station UE to the multiplexing position indicated by the index in TPC-PDCCH, and add CRC (an error detecting code), for which a scrambling process has been performed using RNTI, to the multiplexing position.

In the first characteristic of the present embodiment, when the mobile station UE is in a discontinuous reception state (DRX state), the resource assignment unit 12 may be configured to decide any one of a predetermined number of subframes corresponding to a first half of "On duration (a reception interval)" of the mobile station UE as the specific subframe.

In the first characteristic of the present embodiment, the resource assignment unit 12 may be configured to allow a subframe interval, in which TPC-PDCCH for transmitting the transmission power control command (TPC-PUSCH) for controlling transmission power of an uplink data signal of each mobile station is mapped, to be different from a subframe interval in which TPC-PDCCH for transmitting a transmission power control command (TPC-PUSCH) for controlling transmission power of an uplink control signal of each mobile station is mapped.

In the first characteristic of the present embodiment, the resource assignment unit 12 may be configured to decide the specific subframe among subframes in which transmission power control commands have been already transmitted, and when a subframe to be decided as the specific subframe does not exist in the subframes in which the transmission power control commands have been already transmitted, the resource assignment unit is configured to decide the specific subframe in subframes in which transmission power control commands have not been transmitted.

A gist of a second characteristic of the present embodiment is a mobile communication method, by which a radio base station eNB transmits a transmission power control command for a mobile station UE for controlling transmission power of an uplink data signal of the mobile station via TPC-PDCCH mapped to a specific subframe in PDCCH, and including a step A of deciding the specific subframe and a step B of transmitting the transmission power control command for the mobile station UE via TPC-PDCCH mapped to the specific subframe decided in step A and a step C in which the mobile station UE acquires the transmission power control command for the mobile station UE via TPC-PDCCH, and controls the transmission power of the uplink data signal based on the transmission power control command for the mobile station, wherein, in the step A, the specific subframe is configured to be decided according to a number of transmission power control commands transmitted in each subframe.

In the second characteristic of the present embodiment, in the step A, a subframe, in which a largest number of transmission power control commands are transmitted among the subframes, may be decided as the specific subframe.

In the second characteristic of the present embodiment, in the step A, temporal identification information and TPC-PDCCH index are assigned to the mobile station UE, the index indicating a multiplexing position of the transmission power control command for the mobile station UE in TPC-PDCCH mapped to the specific subframe, in the step B, the transmission power control command for the mobile station UE is multiplexed to the multiplexing position indicated by TPC-PDCCH index in TPC-PDCCH mapped to the specific subframe, and an error detecting code, for which a scrambling process has been performed using the temporal identification information, is added to the multiplexing position, and in the step C, the mobile station UE may attempt to receive a signal on TPC-PDCCH for the mobile station UE by using RNTI, in each subframe.

In the second characteristic of the present embodiment, wherein, when the mobile station is in a discontinuous reception state (DRX state), in the step A, any one of a predetermined number of subframes corresponding to a first half of "On duration" of the mobile station UE may be decided as the specific subframe.

In the second characteristic of the present embodiment, in the step A, a subframe interval, in which TPC-PDCCH for transmitting a transmission power control command for controlling transmission power of an uplink data signal of each mobile station is mapped, may be allowed to be different from a subframe interval in which TPC-PDCCH for transmitting a transmission power control command for controlling transmission power of an uplink control signal of each mobile station is mapped.

In the second characteristic of the present embodiment, in the step A, the specific subframe may decide among subframes in which transmission power control commands have been already transmitted, and when a subframe to be decided as the specific subframe does not exist in the subframes in which the transmission power control commands have been already transmitted, the specific subframe is decided in subframes in which transmission power control commands have not been transmitted.

It is noted that the operation of the above-described mobile station UE or the radio base station eNB may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the mobile station UE or the radio base station eNB. Further, such a storage medium or a processor may be arranged, as a discrete component, in the mobile station UE or the radio base station eNB.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

## Claims

1. A radio base station configured to transmit a transmission power control command for a mobile station for controlling transmission power of an uplink data signal of the mobile station via a downlink control channel for a transmission power control command mapped to a specific subframe in a downlink channel, the radio base station comprising:
a resource assignment unit configured to decide the specific subframe; and
a transmission unit configured to transmit the transmission power control command for the mobile station via the downlink control channel for the transmission power control command mapped to the specific subframe decided by the resource assignment unit, wherein
the resource assignment unit is configured to decide the specific subframe according to a number of transmission power control commands transmitted in each subframe.

2. The radio base station according to claim 1, wherein the resource assignment unit is configured to decide a subframe, in which a largest number of transmission power control commands are transmitted among the subframes, as the specific subframe.

3. The radio base station according to claim 1 or 2, wherein
the resource assignment unit is configured to assign temporal identification information and the index indicating a multiplexing position of the transmission power control command for the mobile station in the downlink control channel for the transmission power control command mapped to the specific subframe to the mobile station, and
the transmission unit is configured to multiplex the transmission power control command for the mobile station to the multiplexing position indicated by the index in the downlink control channel for the transmission power control command mapped to the specific subframe, and add an error detecting code, for which a scrambling process has been performed using the temporal identification information, to the multiplexing position.

4. The radio base station according to any one of claims 1 to 3, wherein
when the mobile station is in a discontinuous reception state, the resource assignment unit is configured to decide any one of a predetermined number of subframes corresponding to a first half of a reception interval of the mobile station as the specific subframe.

5. The radio base station according to any one of claims 1 to 4, wherein
the resource assignment unit is configured to allow a subframe interval, in which the downlink control channel for the transmission power control command for transmitting a transmission power control command for controlling transmission power of an uplink data signal of each mobile station is mapped, to be different from a subframe interval in which a downlink control channel for a transmission power control command for transmitting a transmission power control command for controlling transmission power of an uplink control signal of each mobile station is mapped.

6. The radio base station according to one of claims 1 to 5, wherein
the resource assignment unit is configured to decide the specific subframe among subframes in which transmission power control commands have been already transmitted, and
when a subframe to be decided as the specific subframe does not exist in the subframes in which the transmission power control commands have been already transmitted, the resource assignment unit is configured to decide the specific subframe in subframes in which transmission power control commands have not been transmitted.

7. A mobile communication method, by which a radio base station transmits a transmission power control command for a mobile station for controlling transmission power of an uplink data signal of the mobile station via a downlink control channel for a transmission power control command mapped to a specific subframe in a downlink channel, the mobile communication method comprising:
a step A of deciding the specific subframe;
a step B of transmitting the transmission power control command for the mobile station via the downlink control channel for the transmission power control command mapped to the specific subframe decided in step A; and
a step C in which the mobile station acquires the transmission power control command for the mobile station via the downlink control channel for the transmission power control command, and controls the transmission power of the uplink data signal based on the transmission power control command for the mobile station, wherein,
in the step A, the specific subframe is configured to be decided according to a number of transmission power control commands transmitted in each subframe.

8. The mobile communication method according to claim 7, wherein, in the step A, a subframe, in which a largest number of transmission power control commands are transmitted among the subframes, is decided as the specific subframe.

9. The mobile communication method according to claim 7 or 8, wherein,
in the step A, temporal identification information and an index are assigned to the mobile station, the index indicating a multiplexing position of the transmission power control command for the mobile station in the downlink control channel for the transmission power control command mapped to the specific subframe,
in the step B, the transmission power control command for the mobile station is multiplexed to the multiplexing position indicated by the index in the downlink control channel for the transmission power control command mapped to the specific subframe, and an error detecting code, for which a scrambling process has been performed using the temporal identification information, is added to the multiplexing position, and
in the step C, the mobile station attempts to receive a signal on a downlink control channel for a transmission power control command for the mobile station by using the temporal identification information in each subframe.

10. The mobile communication method according to any one of claims 7 to 9, wherein, when the mobile station is in a discontinuous reception state, in the step A, any one of a predetermined number of subframes corresponding to a first half of a reception interval of the mobile station is decided as the specific subframe.

11. The mobile communication method according to any one of claims 7 to 10, wherein,
in the step A, a subframe interval, in which the downlink control channel for the transmission power control command for transmitting a transmission power control command for controlling transmission power of an uplink data signal of each mobile station is mapped, is allowed to be different from a subframe interval in which a downlink control channel for a transmission power control command for transmitting a transmission power control command for controlling transmission power of an uplink control signal of each mobile station is mapped.

12. The mobile communication method according to any one of claims 7 to 11, wherein,
in the step A, the specific subframe is decided among subframes in which transmission power control commands have been already transmitted, and when a subframe to be decided as the specific subframe does not exist in the subframes in which the transmission power control commands have been already transmitted, the specific subframe is decided in subframes in which transmission power control commands have not been transmitted.
